# EUROPÄISCHE PATENTSCHRIFT

(11) **EP 3 811 821 B1**
(45) Veröffentlichungstag und Bekanntmachung des Hinweises auf die Patenterteilung: **06.03.2024**
(21) Anmeldenummer: 20196945.8
(22) Anmeldetag: 18.09.2020
(51) Int. Cl.: A46D 3/04, A46D 3/08, A46D 7/00

(54) **VERFAHREN ZUM ÜBERPRÜFEN EINER STOPFZUNGE EINES STOPFWERKZEUGS EINER BÜRSTENHERSTELLUNGSMASCHINE SOWIE BÜRSTENHERSTELLUNGSMASCHINE**
BRUSH MANUFACTURING MACHINE AND METHOD FOR CHECKING A TAMPING TONGUE OF A TAMPING TOOL OF A BRUSH MANUFACTURING MACHINE
PROCÉDÉ D'INSPECTION D'UN OUTIL D'INSERTION D'UN OUTIL DE BOURRAGE D'UNE MACHINE DE FABRICATION DE BROSSES ET MACHINE DE FABRICATION DE BROSSES

(30) Priorität: 04.10.2019 DE 102019126766
(43) Veröffentlichungstag der Anmeldung: 28.04.2021
(73) Patentinhaber: GB Boucherie NV, 8870 Izegem (BE)
(72) Erfinder: BOUCHERIE, Bart Gerard, 8870 Izegem (BE)
(74) Vertreter: Prinz & Partner mbB

(56) Entgegenhaltungen:
- DE-A1- 10 312 016
- DE-B3-102016 014 653

## Beschreibung

Die Erfindung betrifft ein Verfahren zum Überprüfen einer Stopfzunge eines Stopfwerkzeugs einer Maschine zur Bürstenherstellung sowie eine Bürstenherstellungsmaschine.

Maschinen zur Bürstenherstellung sind aus dem Stand der Technik allgemein bekannt. Sie enthalten einen Faserkasten, einen Träger für zu bestopfende Bürstengrundkörper, einen Bündelabnehmer, ein Stopfwerkzeug mit einer Stopfzunge sowie eine Steuerung. Bei den Bürstengrundkörpern kann es sich um die Rohlinge für Zahnbürsten, Pinsel, Bürsten, etc. handeln. Abhängig von der Art der Bürste werden unterschiedliche Borsten verwendet, beispielsweise sehr dünne Kunststoffborsten für Zahnbürsten, sehr dicke Kunststoffborsten für Besen oder auch Naturhaare für einige Pinsel und Bürsten.

Die in den Bürstengrundkörper einzubringenden Fasern oder Borsten sind im Faserkasten aufgenommen. Dort werden sie von einem Bündelabnehmer entnommen und einem Stopfwerkzeug zugeführt, welches sie mittels der Stopfzunge in eine Öffnung im Bürstengrundkörper eindrückt. In vielen Fällen werden gleichzeitig mittels des Stopfwerkzeugs Anker eingesetzt, sodass jedes Borstenbündel in der entsprechenden Öffnung im Bürstengrundkörper mittels eines Ankers fest verankert ist.

Aufgrund der Geschwindigkeit, mit der der Stopfvorgang ausgeführt wird, wirken auf die Stopfzunge hohe mechanische Belastungen. Bei jedem einzelnen Stopfvorgang müssen ein Anker und ein Borstenbündel gegriffen und mit einer gewissen Kraft ausreichend tief in den Bürstengrundkörper eingeschoben werden. Bei üblichen Bürstenherstellungsmaschinen liegt die Taktrate in der Größenordnung von 1000 Stopfvorgängen je Minute oder auch höher.

Sollte während des Stopfens das vordere Ende der Stopfzunge abbrechen oder in sonstiger Weise beschädigt werden (beispielsweise verbogen), führt dies dazu, dass die Borstenbündel entweder gar nicht in den Bürstengrundkörper eingebracht werden oder die Borstenbündel zusammen mit den Ankern nicht ausreichend tief in die entsprechende Öffnung des Bürstengrundkörpers eingedrückt werden. Im ersten Fall, also wenn die Borstenbündel gar nicht gesetzt werden, lässt sich die Fehlfunktion vergleichsweise einfach erkennen. Im zweiten Fall, wenn also die Anker nicht vorschriftsmäßig gesetzt werden, lässt sich dies von außen nicht sofort erkennen. Stattdessen ist es erforderlich, entweder die einzelnen Öffnungen in der fertig bestopften Bürste zu inspizieren oder zu messen, welche Auszugskraft erforderlich ist, um die Borstenbündel aus der entsprechenden Öffnung herauszuziehen.

Aus der DE 103 12 016 A1 sind ein Verfahren und eine Vorrichtung bekannt, mit der die Stopfzunge im Stopfwerkzeug dahingehend überprüft werden soll, ob sie beschädigt ist oder nicht. Zu diesem Zweck ist im Stopfwerkzeug eine Öffnung vorgesehen, die sich quer durch den Kanal erstreckt, in welchem die Stopfzunge hin- und herbewegt wird. Diese Öffnung ist dabei so positioniert, dass sie sich nahe des hinteren Totpunkts derart befindet, dass das vordere Ende der Stopfzunge, wenn es intakt ist, sich im Bereich des Querschnitts der Öffnung befindet. Das Vorhandensein des vorderen Abschnittes der Stopfzunge kann optisch, induktiv oder mittels eines Luftstroms erfasst werden, der an die Öffnung angelegt wird. Wenn entweder ein Lichtstrahl oder die Druckluft von einer Seite der Öffnung auf die andere gelangen kann, ist dies ein Zeichen dafür, dass das vordere Ende der Stopfzunge nicht mehr vorhanden ist.

Es hat sich in der Praxis herausgestellt, dass auf diese Weise eine Beschädigung des vorderen Abschnittes des Stopfzunge nicht mit der gewünschten Genauigkeit und Geschwindigkeit erfasst werden kann. Ein optisches System ist recht empfindlich gegen Staub und herumfliegende Borsten. Ein induktives System kann innerhalb des Stopfwerkzeugs nur sehr schwer mit der gewünschten Genauigkeit arbeiten. Bei Druckluft stellt sich das Problem, dass zwar erkannt werden kann, wenn das vordere Ende der Stopfzunge vollständig abgebrochen ist. Bei einem Teilausbruch ist der sich ergebende zusätzliche Strömungsquerschnitt allerdings vergleichsweise gering, sodass kein markanter Unterschied zu den ohnehin unvermeidbaren Leckagen erkannt werden kann.

Die Aufgabe der Erfindung besteht darin, ein Verfahren und eine Vorrichtung zu schaffen, mit dem bzw. der eine Beschädigung der Stopfzunge sehr schnell und mit hoher Genauigkeit erkannt werden kann.

Zur Lösung dieser Aufgabe ist erfindungsgemäß ein Verfahren zum Überprüfen einer Stopfzunge eines Stopfwerkzeugs einer Maschine zur Bürstenherstellung mittels der folgenden Schritte vorgesehen:
- zwischen zwei Stopfschritten wird mindestens ein Leer-Stopfschritt durchgeführt, in dem die Stopfzunge frei aus dem Stopfwerkzeug austritt,
- während des Leer-Stopfschritts wird der aus dem Stopfwerkzeug austretende Abschnitt der Stopfzunge erfasst,
- es wird durch einen Vergleich mit Soll-Daten ermittelt, ob die Stopfzunge die für einen ordnungsgemäßen Betrieb der Bürstenherstellungsmaschine erforderlichen Kriterien erfüllt.

Die Erfindung beruht auf dem Grundgedanken, die Stopfzunge in einen "Testzustand" zu bringen, indem nämlich der Leer-Stopfschritt durchgeführt wird, in welchem die Stopfzunge zwar aus dem Stopfwerkzeug herausfährt, als ob sie einen Stopfvorgang durchführen würde, aber dafür gesorgt ist, dass all diejenigen Elemente nicht vorhanden sind, die es im normalen Betrieb verhindern, das vordere Ende der Stopfzunge zu inspizieren. Während eines normalen Stopfvorgangs ist nämlich das vordere Ende der Stopfzunge vom Borstenbündel umgeben, sodass es nicht inspiziert werden kann. Außerdem taucht es beim Stopfen in die entsprechende Öffnung des Bürstengrundkörpers ein, was es ebenfalls unmöglich macht, das vordere Ende der Stopfzunge zu inspizieren. Selbst beim Rücklauf, also nach dem Einbringen des Borstenbündels (und gegebenenfalls des Ankers) in den Bürstengrundkörper, ist das vordere Ende der Stopfzunge aufgrund der bereits gesetzten Borstenbündel im Allgemeinen nicht sichtbar. Beim Leer-Stopfschritt, bei dem die Stopfzunge einen Stopfhub "ins Freie" und ohne Borstenbündel (und gegebenenfalls Anker) ausführt, liegt dagegen das vordere Ende der Stopfzunge so frei, dass erfasst werden kann, ob es beschädigt oder einwandfrei ist.

Vorzugsweise wird für den Leer-Stopfschritt die Zufuhr eines Ankers unterbunden. Der Anker würde ansonsten, da er nicht in einen Bürstengrundkörper eingesetzt wird, von der Stopfzunge frei ausgeworfen.

Vorzugsweise kann für den Leer-Stopfschritt die Zufuhr von Material des Ankers ausgesetzt werden. Es muss hierfür lediglich für einen Stopfhub der Materialvorschub ausgeschaltet werden; ein Schneidewerkzeug kann weiterhin betrieben werden. Auf diese Weise ist der Eingriff in den normalen Betriebsablauf der Bürstenherstellungsmaschine minimal.

Um zu gewährleisten, dass der vordere Abschnitt der Stopfzunge beim Leer-Stopfschritt frei sichtbar ist, wird für den Leer-Stopfschritt vorzugsweise die Zufuhr eines Borstenbündels unterbunden; ein Bündelabnehmer, der beim Stopfen ein Borstenbündel aus einem Faserkasten übernimmt und an das Stopfwerkzeug übergibt, wird dabei weiterbewegt. Auch hierdurch ist gewährleistet, dass der Eingriff in den normalen Betriebsablauf der Bürstenherstellungsmaschine minimal ist.

Für den Leer-Stopfschritt kann der Faserkasten in eine Position verstellt werden, in der kein Borstenbündel an den Bündelabnehmer übergeben wird. Alternativ kann für den Leer-Stopfschritt auch ein Ausgang des Faserkastens verschlossen werden. Die in den beiden Fällen erforderlichen Mechanismen sind allgemein bekannt, insbesondere von Mehrfach-Faserkästen, sodass hier kein technischer Mehraufwand erforderlich ist.

Gemäß einer Ausgestaltung der Erfindung ist vorgesehen, dass für den Leer-Stopfschritt die Zustellung der Bürstengrundkörper so gesteuert wird, dass sich die Stopfzunge beim Leer-Stopfschritt außerhalb eines Bürstengrundkörpers befindet. Anders ausgedrückt: Die Bürstengrundkörper werden für den Leer-Stopfschritt so bewegt, dass das vordere Ende der Stopfzunge nicht in eine Öffnung eines Bürstengrundkörpers eintritt, sondern sich im freien Raum bewegt.

Gemäß einer Ausgestaltung der Erfindung kann hierfür vorgesehen sein, dass für den Leer-Stopfschritt ein Träger, auf dem die mit Borsten zu bestückenden Bürstengrundkörper gehalten sind, um eine Strecke weiterverstellt wird, die kleiner ist als der Weg von einem Bürstengrundkörper zum nächsten. Beispielsweise kann, wenn der Träger trommelförmig angeordnet ist und auf seinem Außenumfang vier Bürstengrundkörper spannen kann, dieser Träger von einem gerade bestopften Bürstengrundkörper nicht um 90° zum nächsten Bürstengrundkörper weiterverstellt werden, sondern zunächst um 45°, um den Leer-Stopfschritt auszuführen, und anschließend um weitere 45°, so dass dann der nächste Bürstengrundkörper bestopft werden kann.

Um beim Leer-Stopfschritt den aus dem Stopfwerkzeug austretenden Abschnitt der Stopfzunge zu erfassen, kann ein mechanischer Sensor vorgesehen sein. Mit diesem können Position und Kontur des vorderen Abschnitts der Stopfzunge erfasst werden.

Es ist auch möglich, dass ein berührungsloser Sensor vorgesehen ist, mit dem der im Leer-Stopfschritt aus dem Stopfwerkzeug austretende Abschnitt der Stopfzunge erfasst wird, beispielsweise ein optischer Sensor, der mittels mehrerer Lichtschranken erfasst, ob die Kontur des vorderen Abschnittes des Stopfzunge vollständig ist (also kein Teil abgebrochen ist) und auch erfasst, ob sich die Stopfzunge in der vordersten Position dort befindet, wo sie sein soll, also die Anker mit der gewünschten Tiefe in den Bürstengrundkörper drückt.

Gemäß einer bevorzugten Ausführungsform der Erfindung ist ein Bilderfassungs- und -auswertungssystem vorgesehen, mit dem der im Leer-Stopfschritt aus dem Stopfwerkzeug austretende Abschnitt der Stopfzunge erfasst und analysiert wird. Mit einem solchen Bilderfassungs- und auswertungssystem kann sowohl die Kontur als auch die Position des vorderen Abschnittes der Stopfzunge sehr präzise analysiert werden. So kann festgestellt werden, ob an der vorderen Kante der Stopfzunge Material ausgebrochen ist oder die vordere Kante insgesamt abgebrochen ist. Es kann außerdem festgestellt werden, ob der vordere Abschnitt der Stopfzunge verbogen ist, sodass sich die vordere Kante der Stopfzunge im vorderen Totpunkt auf der einen oder der anderen Seite ihrer eigentlich vorgesehenen Position befindet. Mit einem solchen Bilderfassungs- und -auswertungssystem kann auch eine Entscheidung getroffen werden, ob eventuelle Beschädigungen oder Verbiegungen so gering sind, dass die Stopfzunge (noch einige Zeit) weiterbetrieben werden kann oder ob ein sofortiger Austausch oder eine neue Justage sinnvoll ist.

Gemäß einer Ausgestaltung der Erfindung wird die Bildauswertung während eines sich an einen ersten Leer-Stopfschritt anschließenden zweiten Leer-Stopfschrittes durchgeführt. Dies hat den Vorteil, dass für die Bildauswertung ein längerer Zeitraum zur Verfügung steht, sodass auf kostengünstigere Hard- und Software zurückgegriffen werden kann.

Es ist auch möglich, dass die Bürstenherstellungsmaschine während der Bildauswertung gestoppt oder verlangsamt wird. Auch in diesem Fall steht eine vergleichsweise lange Zeitdauer zur Verfügung, um eine Entscheidung herbeizuführen, ob die Stopfzunge die Anforderungen erfüllt oder nicht.

Die Bildauswertung kann auch während des Stopfvorgangs des nächsten Bürstengrundkörpers durchgeführt werden. In diesem Fall steht noch mehr Zeit zur Verfügung, um das während des Leer-Stopfschritts aufgenommene Bild vom vorderen Abschnitt der Stopfzunge zu analysieren. Falls hierbei erkannt wird, dass die Stopfzunge über ein zulässiges Maß hinaus beschädigt ist, werden die aktuell hergestellte und die vorherige Bürste als Ausschuss markiert.

Der Leer-Stopfschritt kann durchgeführt werden, nachdem ein Bürstengrundkörper vollständig mit Borstenbündeln bestopft ist. Alternativ kann auch vorgesehen sein, dass der Leer-Stopfschritt in größeren Abständen erfolgt, beispielsweise nach jeder fünften, jeder zehnten, jeder hundertsten, etc. Bürste. Es handelt sich hier um eine Abwägung zwischen einem Verlust an Stopfgeschwindigkeit einerseits (falls an einem Bürstengrundkörper beispielsweise 30 Öffnungen bestopft werden müssen, würde sich der Ausstoß um 3,3 % verringern, wenn der Leer-Stopfschritt nach jedem Bürstengrundkörper ausgeführt wird) und dem Risiko andererseits, eine bestimmte Anzahl von nicht vorschriftsmäßig bestopften Bürsten herzustellen, wenn eine Beschädigung der Stopfzunge nicht rechtzeitig erkannt wird.

Die Erfindung schafft auch eine Bürstenherstellungsmaschine mit einem Faserkasten, einem Träger für zu bestopfende Bürstengrundkörper, einem Bündelabnehmer, einem Stopfwerkzeug mit einer Stopfzunge, einer Steuerung und einem Erfassungssystem für einen vorderen Abschnitt der Stopfzunge, wobei das Erfassungssystem dem vorderen Ende des Stopfwerkzeugs zugeordnet ist und die Steuerung dafür ausgelegt ist, ein Verfahren der vorstehend genannten Art auszuführen. Hinsichtlich der sich ergebenden Vorteile wird auf die obigen Erläuterungen verwiesen.

Die Erfindung wird nachfolgend anhand einer Ausführungsform beschrieben, die in den beigefügten Zeichnungen dargestellt ist. In diesen zeigen:
- Figur 1 schematisch eine erfindungsgemäße Maschine zur Bürstenherstellung während des Normalbetriebs;
- Figur 2 die Bürstenherstellungsmaschine von Figur 1 in einer vergrößerten Ansicht, wobei einige Bauteile nicht dargestellt sind;
- Figur 3 die Bürstenherstellungsmaschine von Figur 1 in einem Zustand, in welchem ein Leer-Stopfschritt durchgeführt wird;
- Figur 4 ein Beispiel für einen Mehrfach-Faserkasten, der bei der Bürstenherstellungsmaschine der Figuren 1 bis 3 verwendet werden kann, wobei sich der Faserkasten in einem normalen Betriebszustand befindet; und
- Figur 5 den Faserkasten von Figur 4, wobei sich dieser in einem Zustand während des Leer-Stopfschritts befindet.

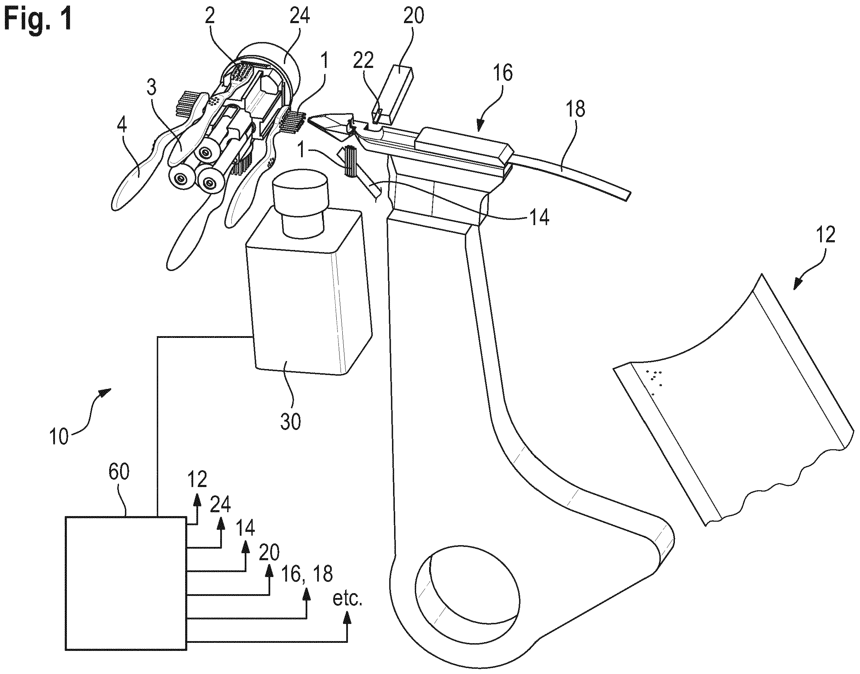

In Figur 1 ist schematisch eine Bürstenherstellungsmaschine 10 gezeigt, mit der im gezeigten Ausführungsbeispiel mehrere Borstenbündel 1 in jeweils eine Öffnung 2 eines Bürstengrundkörpers 3 gestopft werden. Auf diese Weise werden hier Zahnbürsten 4 hergestellt.

Die Borstenbündel 1 sind jeweils gebildet durch mehrere Fasern oder Borsten, die in einem (in Figur 1 sehr schematisch dargestellten) Faserkasten 12 aufgenommen sind. Vom Faserkasten 12 werden die Borstenbündel mittels eines (in Figur 1 ebenfalls nur sehr schematisch dargestellten) Bündelabnehmers 14 entnommen und einem Stopfwerkzeug 16 zugeführt. Das Stopfwerkzeug 16 weist eine Stopfzunge 18 auf, die im Stopfwerkzeug 16 in einer hin- und hergehenden Bewegung verstellt werden kann, um die vom Bündelabnehmer 14 zugeführten Borstenbündel 1 zu übernehmen und in die entsprechende Öffnung 2 im Bürstengrundkörper 3 einzubringen.

Dem Stopfwerkzeug 16 ist auch ein Zufuhrsystem 20 für Anker 22 zugeordnet, die ebenfalls mittels der Stopfzunge 18 in die entsprechende Öffnung 2 im Bürstengrundkörper 3 eingebracht werden. In an sich grundsätzlich bekannter Weise wird, wenn die Stopfzunge 18 eine Vorwärtsbewegung ausführt, von ihr am vorderen Ende zunächst der Anker 22 und anschließend ein Borstenbündel 1 mitgenommen, die dann zusammen in die Öffnung 2 im Bürstengrundkörper eingedrückt werden.

Beim Anker 22 kann es sich beispielsweise um ein Metallplättchen oder eine Drahtschlinge handeln.

Die Bürstengrundkörper 2 sind auf einem Träger 24 montiert, der hier trommelartig aufgebaut ist und an seinem Außenumfang insgesamt vier Bürstengrundkörper aufnehmen kann.

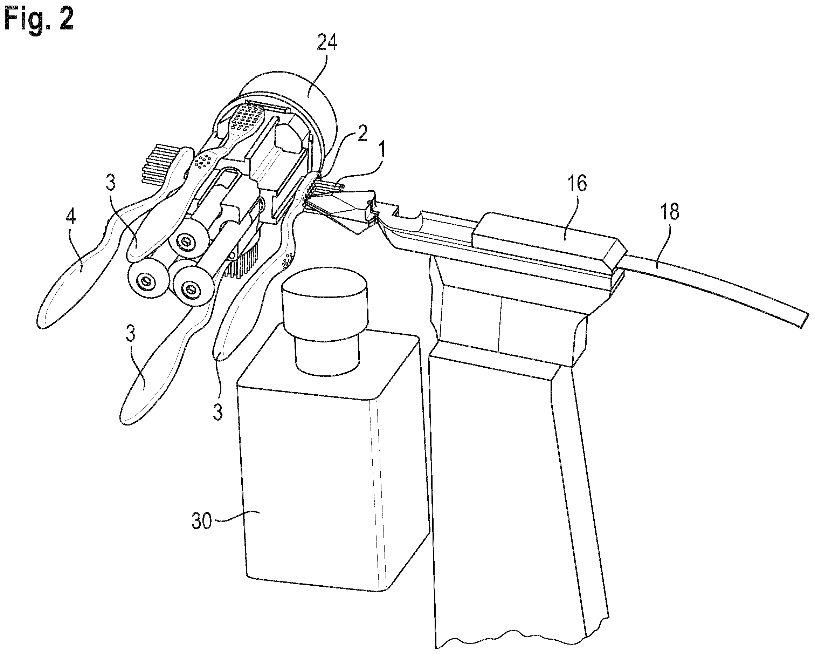

In Figur 2 ist die Bürstenherstellungsmaschine von Figur 1 in einem Zustand gezeigt, in welchem das Stopfwerkzeug 16 während eines Stopfvorgangs nach vorne bewegt ist. Die Stopfzunge 18 wird dann so nach vorne gefahren, dass sie in die Öffnung 2 des Bürstengrundkörpers eindringt und dort das entsprechende Borstenbündel 1 verankert (dieses ist in Figur 2 zur besseren Übersichtlichkeit nicht dargestellt).

Der grundsätzliche Aufbau und die grundsätzliche Art und Weise, wie die Borstenbündel in den Bürstengrundkörper eingesetzt werden, ist aus dem Stand der Technik allgemein bekannt.

Ebenfalls grundsätzlich aus dem Stand der Technik ist bekannt, dass das vordere Ende der Stopfzunge 18 sehr hohen mechanischen Belastungen ausgesetzt ist und ein hohes Risiko besteht, dass das vordere Ende beschädigt wird oder vollständig abbricht. Dies würde dazu führen, dass das Borstenbündel und der Anker von der Stopfzunge entweder gar nicht oder nicht mit der gewünschten Tiefe in die entsprechende Öffnung 2 des Bürstengrundkörpers eingedrückt würden. Gleichzeitig ist insbesondere in Figur 2 zu erkennen, dass das vordere Ende der Stopfzunge 18 in keinem Betriebszustand der Bürstenherstellungsmaschine sichtbar ist.

Wenn das Stopfwerkzeug 16 sich in einer zurückgezogenen Position befindet, in der ein Borstenbündel vom Bündelabnehmer an das Stopfwerkzeug übergeben wird (siehe Figur 1), befindet sich das vordere Ende der Stopfzunge 18 zurückgezogen im Stopfwerkzeug. Wenn die Stopfzunge das Borstenbündel zusammen mit dem Anker in den Bürstengrundkörper eindrückt, liegt das vordere Ende des Stopfwerkzeugs 16 in unmittelbarer Nähe des Bürstengrundkörpers, und die Stopfzunge 18 wird in die entsprechende Öffnung 2 hineingeschoben. Hinzukommt, dass anders als bei der Darstellung von Figur 2 auch das Borstenbündel dort vorhanden ist, sodass die Stopfzunge nicht zu sehen ist.

Die erfindungsgemäße Bürstenherstellungsmaschine 10 weist, um den Zustand des vorderen Endes der Stopfzunge 18 erfassen zu können, ein Erfassungssystem 30 auf, mit dem das vordere Ende der Stopfzunge 18 erfasst werden kann.

Weiterhin ist eine Steuerung 60 vorgesehen, die die Funktionen der Bürstenherstellungsmaschine sowie das Erfassungssystem 30 steuert.

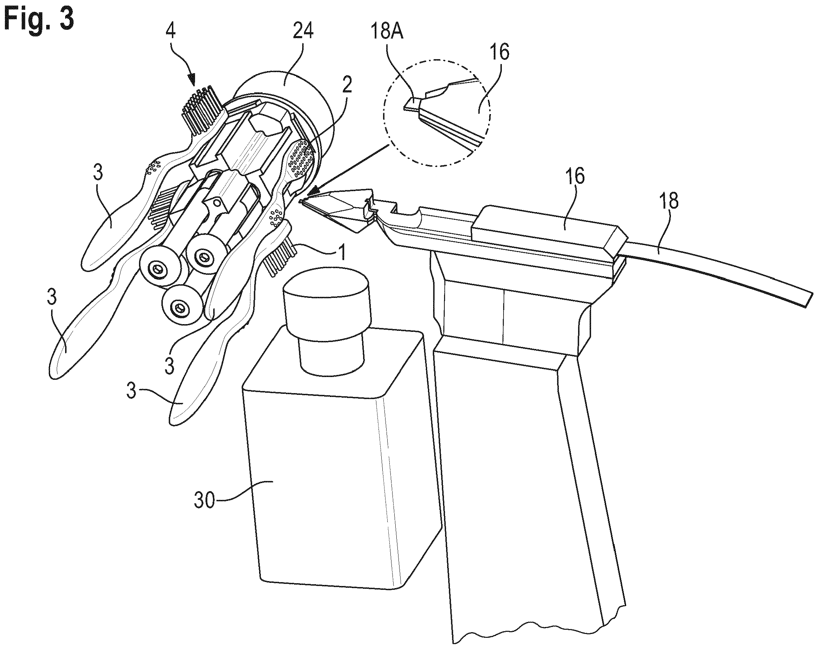

Um das vordere Ende der Stopfzunge 18 erfassen zu können, ist vorgesehen, dass die Bürstenherstellungsmaschine 10 nach einer vorgebbaren Anzahl von Stopfvorgängen einen Leer-Stopfschritt ausführt, also einen Stopfschritt, bei dem kein Borstenbündel vorhanden ist, auch kein Anker eingesetzt wird und außerdem das vordere Ende der Stopfzunge 18 nicht in eine Öffnung eines Bürstengrundkörpers eintritt. Dieser Zustand ist in Figur 3 gezeigt. Beim Leer-Stopfschritt wird also das vordere Ende der Stopfzunge 18 frei aus dem Stopfwerkzeug 16 in den Raum vorgeschoben.

Der Leer-Stopfschritt erfordert nur einen minimalen Eingriff in den normalen Betriebsablauf der Bürstenherstellungsmaschine 10.

Um zu verhindern, dass dem Stopfwerkzeug 16 ein Anker 22 zugeführt wird, ist es ausreichend, den Vorschub des Materials, aus dem die Anker hergestellt werden, für den Leer-Stopfschritt auszusetzen. Beispielsweise kann hierfür ein Servomotor, mit dem das Material normalerweise einem Schneidewerkzeug zugeführt wird, entsprechend angesteuert werden.

Um zu verhindern, dass der Stopfzunge 18 ein Borstenbündel 1 zugeführt wird, kann eine Abgabeöffnung für die Fasern am Faserkasten mittels einer Klappe oder eines Hebels kurzzeitig für den Leer-Stopfschritt verschlossen werden.

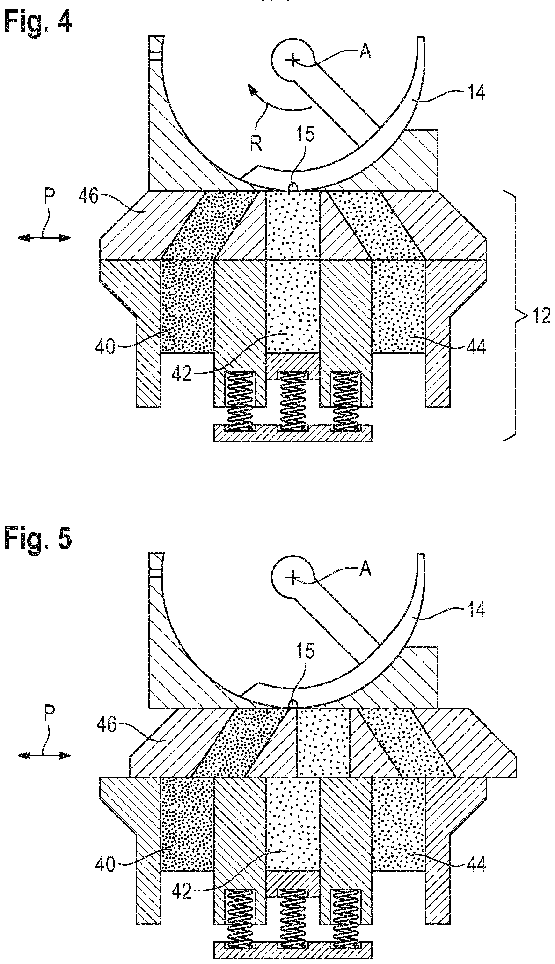

Bei Mehrfach-Faserkästen ist es auch möglich, die Faserkästen oder ein an ihnen vorgesehenes Verstellbauteil in eine solche Stellung bringen, dass der Bündelabnehmer kein Borstenbündel entnehmen kann. Dies wird kurz anhand der Figuren 4 und 5 erläutert.

In Figur 4 ist der Faserkasten 12 in einem normalen Betriebszustand gezeigt. Er weist drei Faserkanäle 40, 42, 44 auf, in denen unterschiedliche Faserarten enthalten sind. Mittels eines Schiebers 46 kann gesteuert werden, welche Faserart einer Bündelabteilerkerbe 15 des Bündelabnehmers 14 zugeführt wird.

In Figur 4 ist der Faserkasten 12 in einem Zustand gezeigt, in welchem die Fasern aus dem mittleren Faserkanal 42 zugeführt werden.

Wenn ein Leer-Stopfschritt durchgeführt wird, wird der Schieber 46 in die in Figur 5 gezeigte Zwischenposition gebracht, in welcher die Bündelabteilerkerbe 15 im Bereich eines Zwischenstegs zwischen zwei Faserkanälen liegt. Dementsprechend werden der Bündelabteilerkerbe 15 keine Fasern bereitgestellt, sodass der Bündelabnehmer 14 kein Faserbündel 1 zum Stopfwerkzeug 16 transportiert. Der Bündelabnehmer 14 als solcher kann unverändert weiterbetrieben werden; es ist nicht nötig, ihn vom Antrieb abzukoppeln.

Der Träger 24 für die Bürstengrundkörper 3 wird, wenn der Leer-Stopfschritt durchgeführt wird, so positioniert, dass dem Stopfwerkzeug 16 kein Bürstengrundkörper gegenüberliegt. Beim gezeigten Ausführungsbeispiel wird der Träger 24 also nicht um 90° von einem Bürstengrundkörper zum nächsten weiterverstellt, sondern beispielsweise um lediglich 45°, sodass die Stopfzunge 18 ins Leere zwischen zwei Bürstengrundkörpern "stopft".

Wenn der Leer-Stopfschritt durchgeführt wird, wird das vordere Ende der Stopfzunge 18 (siehe den Abschnitt 18A der ausschnittsweisen Vergrößerung in Figur 3) mittels des Erfassungssystems 30 erfasst. "Erfassen" bedeutet, dass diejenigen Parameter erfasst werden, die erforderlich sind, um eine Entscheidung zu treffen, ob der vordere Abschnitt 18A der Stopfzunge 18 "in Ordnung" ist. Diese Parameter können insbesondere die Kontur des vorderen Abschnittes 18A sowie seine Position sowohl in Längsrichtung als auch senkrecht hierzu sein. Auf diese Weise kann bestimmt werden, ob die vordere Kante der Stopfzunge 18 intakt ist oder ob Teile abgebrochen sind. Es kann auch erkannt werden, ob sich die vordere Kante der Stopfzunge 18 im vorderen Totpunkt an der gewünschten Position befindet, sodass Anker und Borstenbündel ausreichend tief in einen Bürstengrundkörper eingestopft werden, oder ob die Stopfzunge 18 neu justiert werden muss. Schließlich kann erkannt werden, ob der vordere Abschnitt 18A der Stopfzunge 18 sich verbogen hat, sodass die Borstenbündel und Anker nicht mehr mittig in die entsprechende Öffnung 2 im Bürstengrundkörper 3 eingedrückt werden.

Beim Erfassungssystem 30 handelt es sich insbesondere um eine Kamera und ein Bildauswertungssystem. Mit der Kamera wird zumindest dann ein Bild vom vorderen Abschnitt 18A der Stopfzunge 18 gemacht, wenn diese sich im vorderen Totpunkt befindet, also maximal aus dem Stopfwerkzeug 16 zum Träger 24 herausgeschoben.

Mit dem Bildauswertungssystem wird eine Bilderkennung dahingehend durchgeführt, ob Kontur und/oder Position der vorderen Kante und des vorderen Abschnittes 18A des Stopfwerkzeugs sich innerhalb vorgegebener Toleranzen befinden.

In einem Ausführungsbeispiel ist vorgesehen, dass der Leer-Stopfschritt immer dann erfolgt, wenn sämtliche Löcher eines Bürstengrundkörpers bestopft wurden. Bevor dann begonnen wird, die nächste Bürste herzustellen, wird im Leer-Stopfschritt erfasst, ob die Stopfzunge 18 noch in Ordnung ist. Falls erkannt wird, dass dies nicht der Fall ist, kann die zuletzt hergestellte Bürste als Ausschuss markiert werden. Wenn die Stopfzunge 18 dagegen in Ordnung ist, wird die nächste Bürste gestopft.

## Patentansprüche

1. Verfahren zum Überprüfen einer Stopfzunge (18) eines Stopfwerkzeugs (16) einer Maschine (10) zur Bürstenherstellung, wobei die folgenden Schritte vorgesehen sind:
- zwischen zwei Stopfschritten wird mindestens ein Leer-Stopfschritt durchgeführt, in dem die Stopfzunge (18) frei aus dem Stopfwerkzeug (16) austritt,
- während des Leer-Stopfschritts wird der aus dem Stopfwerkzeug (16) austretende Abschnitt (18A) der Stopfzunge (18) erfasst,
- es wird durch einen Vergleich mit Soll-Daten ermittelt, ob die Stopfzunge (18) die für einen ordnungsgemäßen Betrieb der Bürstenherstellungsmaschine (10) erforderlichen Kriterien erfüllt.

2. Verfahren nach Anspruch 1, **dadurch gekennzeichnet, dass** für den Leer-Stopfschritt die Zufuhr eines Ankers (22) unterbunden wird.

3. Verfahren nach Anspruch 2, **dadurch gekennzeichnet, dass** für den Leer-Stopfschritt die Zufuhr von Material des Ankers (22) ausgesetzt wird.

4. Verfahren nach einem der vorhergehenden Ansprüche, **dadurch gekennzeichnet, dass** für den Leer-Stopfschritt die Zufuhr eines Borstenbündels (1) unterbunden wird.

5. Verfahren nach Anspruch 4, **dadurch gekennzeichnet, dass** für den Leer-Stopfschritt ein Faserkasten (12) in eine Position verstellt wird, in der kein Borstenbündel (1) an den Bündelabnehmer (14) übergeben wird.

6. Verfahren nach Anspruch 4 oder Anspruch 5, **dadurch gekennzeichnet, dass** für den Leer-Stopfschritt ein Ausgang eines Faserkastens (12) verschlossen wird.

7. Verfahren nach einem der vorhergehenden Ansprüche, **dadurch gekennzeichnet, dass** während des Leer-Stopfschrittes ein Bündelabnehmer (14), der beim Stopfen ein Borstenbündel (1) aus einem Faserkasten (12) entnimmt und an das Stopfwerkzeug (16) übergibt, weiterhin bewegt wird.

8. Verfahren nach einem der vorhergehenden Ansprüche, **dadurch gekennzeichnet, dass** für den Leer-Stopfschritt die Zustellung der Bürstengrundkörper (3) so gesteuert wird, dass sich der vordere Abschnitt (18A) der Stopfzunge (18) beim Leer-Stopfschritt außerhalb eines Bürstengrundkörpers (3) befindet.

9. Verfahren nach Anspruch 8, **dadurch gekennzeichnet, dass** für den Leer-Stopfschritt ein Träger (24), auf dem die mit Borsten zu bestückenden Bürstengrundkörper (3) gehalten sind, um eine Strecke weiterverstellt wird, die kleiner ist als der Weg von einem Bürstengrundkörper (3) zum nächsten.

10. Verfahren nach einem der vorhergehenden Ansprüche, **dadurch gekennzeichnet, dass** ein mechanischer Sensor vorgesehen ist, mit dem der im Leer-Stopfschritt aus dem Stopfwerkzeug (16) austretenden Abschnitt (18A) der Stopfzunge (18) erfasst wird.

11. Verfahren nach einem der Ansprüche 1 bis 9, **dadurch gekennzeichnet, dass** ein berührungsloser Sensor vorgesehen ist, mit dem der im Leer-Stopfschritt aus dem Stopfwerkzeug (16) austretende Abschnitt (18A) der Stopfzunge (18) erfasst wird.

12. Verfahren nach einem der Ansprüche 1 bis 9, **dadurch gekennzeichnet, dass** ein Bilderfassungs- und -auswertungssystem (30) vorgesehen ist, mit dem der im Leer-Stopfschritt aus dem Stopfwerkzeug (16) austretenden Abschnitt (18A) der Stopfzunge (18) erfasst und analysiert wird.

13. Verfahren nach Anspruch 12, **dadurch gekennzeichnet, dass** die Bildauswertung während eines sich an einen ersten Leer-Stopfschritt anschließenden zweiten Leer-Stopfschrittes durchgeführt wird.

14. Verfahren nach Anspruch 12, **dadurch gekennzeichnet, dass** die Bürstenherstellungsmaschine (10) während der Bildauswertung gestoppt oder verlangsamt wird.

15. Verfahren nach Anspruch 12, **dadurch gekennzeichnet, dass** die Bildauswertung während des Stopfvorgangs des nächsten Bürstengrundkörpers (3) durchgeführt wird.

16. Verfahren nach einem der vorhergehenden Ansprüche, **dadurch gekennzeichnet, dass** die Position des vorderen Endes der Stopfzunge (18) in ihrer maximal vorgeschobenen Position erfasst wird.

17. Verfahren nach einem der vorhergehenden Ansprüche, **dadurch gekennzeichnet, dass** die Form des aus dem Stopfwerkzeug (16) austretenden Abschnittes (18A) der Stopfzunge (18) analysiert wird.

18. Verfahren nach einem der vorhergehenden Ansprüche, **dadurch gekennzeichnet, dass** der Leer-Stopfhub nach einer einstellbaren Anzahl von Stopfhüben eingeschoben wird.

19. Bürstenherstellungsmaschine (10) mit einem Faserkasten (12), einem Träger (24) für zu bestopfende Bürstengrundkörper (3), einem Bündelabnehmer (14), einem Stopfwerkzeug (16) mit einer Stopfzunge (18), einer Steuerung (60) und einem Erfassungssystem (30) für einen vorderen Abschnitt (18A) der Stopfzunge (18), wobei das Erfassungssystem (30) dem vorderen Ende des Stopfwerkzeugs (16) zugeordnet ist und die Steuerung (60) dafür ausgelegt ist, ein Verfahren nach einem der vorhergehenden Ansprüche auszuführen.

20. Bürstenherstellungsmaschine nach Anspruch 19, **dadurch gekennzeichnet, dass** das Erfassungssystem (30) eine Kamera und ein Bildauswertungssystem aufweist.

## Claims

1. A method of checking a tufting tongue (18) of a tufting tool (16) of a machine (10) for making brushes, wherein the following steps are provided:
- performing, between two tufting steps, at least one blank tufting step, in which the tufting tongue (18) emerges from the tufting tool (16) freely;
- detecting, during the blank tufting step, the portion (18A) of the tufting tongue (18) emerging from the tufting tool (16);
- determining, by a comparison with target data, whether the tufting tongue (18) meets the criteria required for proper operation of the brush making machine (10).

2. The method according to claim 1, **characterized in that** for the blank tufting step, supply of an anchor (22) is prevented.

3. The method according to claim 2, **characterized in that** for the blank tufting step, the supply of material of the anchor (22) is interrupted.

4. The method according to any of the preceding claims, **characterized in that** for the blank tufting step, the supply of a bristle bundle (1) is prevented.

5. The method according to claim 4, **characterized in that** for the blank tufting step, a fiber box (12) is shifted to a position in which no bristle bundle (1) is transferred to the bundle remover (14).

6. The method according to claim 4 or claim 5, **characterized in that** for the blank tufting step, an outlet of a fiber box (12) is closed.

7. The method according to any of the preceding claims, **characterized in that** during the blank tufting step, a bundle remover (14) which, during tufting, removes a bristle bundle (1) from a fiber box (12) and transfers it to the tufting tool (16), continues to be moved.

8. The method according to any of the preceding claims, **characterized in that** for the blank tufting step, the feed of the brush base bodies (3) is controlled such that the front portion (18A) of the tufting tongue (18) is located outside a brush base body (3) during the blank tufting step.

9. The method according to claim 8, **characterized in that** for the blank tufting step, a carrier (24) on which the brush base bodies (3) to be equipped with bristles are held is shifted further by a distance which is smaller than the path from one brush base body (3) to the next.

10. The method according to any of the preceding claims, **characterized in that** a mechanical sensor is provided which is used for detecting the portion (18A) of the tufting tongue (18) emerging from the tufting tool (16) in the blank tufting step.

11. The method according to any of claims 1 to 9, **characterized in that** a noncontact sensor is provided which is used for detecting the portion (18A) of the tufting tongue (18) emerging from the tufting tool (16) in the blank tufting step.

12. The method according to any of claims 1 to 9, **characterized in that** an image acquisition and evaluation system (30) is provided which is used for detecting and analyzing the portion (18A) of the tufting tongue (18) emerging from the tufting tool (16) in the blank tufting step.

13. The method according to claim 12, **characterized in that** the image evaluation is performed during a second blank tufting step that follows a first blank tufting step.

14. The method according to claim 12, **characterized in that** the brush making machine (10) is stopped or slowed down during the image evaluation.

15. The method according to claim 12, **characterized in that** the image evaluation is performed during the process of tufting the next brush base body (3).

16. The method according to any of the preceding claims, **characterized in that** the position of the front end of the tufting tongue (18) is detected in its maximum advanced position.

17. The method according to any of the preceding claims, **characterized in that** the shape of the portion (18A) of the tufting tongue (18) emerging from the tufting tool (16) is analyzed.

18. The method according to any of the preceding claims, **characterized in that** the blank tufting stroke is inserted after an adjustable number of tufting strokes.

19. A brush making machine (10) comprising a fiber box (12), a carrier (24) for brush base bodies (3) to be tufted, a bundle remover (14), a tufting tool (16) having a tufting tongue (18), a control unit (60), and a detection system (30) for a front portion (18A) of the tufting tongue (18), wherein the detection system (30) is associated with the front end of the tufting tool (16) and the control unit (60) is designed to carry out a method according to any of the preceding claims.

20. The brush making machine according to claim 19, **characterized in that** the detection system (30) includes a camera and an image evaluation system.

## Revendications

1. Procédé de contrôle d'une languette de bourrage (18) d'un outil de bourrage (16) d'une machine (10) pour la fabrication de brosses, les étapes suivantes étant prévues :
- une étape de bourrage à vide dans laquelle la languette de bourrage (18) sort librement de l'outil de bourrage (16) est réalisée entre deux étapes de bourrage ;
- le tronçon (18A) de la languette de bourrage (18) sortant de l'outil de bourrage (16) est détecté pendant l'étape de bourrage à vide ;
- au moyen d'une comparaison avec des données de consigne, il est déterminé si la languette de bourrage (18) réunit les critères nécessaires pour le bon fonctionnement de la machine de fabrication de brosse (10).

2. Procédé selon la revendication 1, **caractérisé en ce que** pour l'étape de bourrage à vide, l'amenée d'un ancre (22) est empêchée.

3. Procédé selon la revendication 2, **caractérisé en ce que** pour l'étape de bourrage à vide, l'amenée de matériau de l'ancre (22) est interrompue.

4. Procédé selon l'une des revendications précédentes, **caractérisé en ce que** pour l'étape de bourrage à vide, l'amenée d'une touffe de poils (1) est empêchée.

5. Procédé selon la revendication 4, **caractérisé en ce que** pour l'étape de bourrage à vide, une boîte de fibres (12) est déplacée dans une position dans laquelle aucune touffe de poils (1) n'est transférée au moyen de prise de touffe (14).

6. Procédé selon la revendication 4 ou la revendication 5, **caractérisé en ce que** pour l'étape de bourrage à vide, une sortie d'une boîte de fibres (12) est fermée.

7. Procédé selon l'une des revendications précédentes, **caractérisé en ce que** pendant l'étape de bourrage à vide, un moyen de prise de touffe (14) qui extrait une touffe de poils (1) de la boîte de fibres (12) lors du bourrage et la transfert à l'outil de bourrage (16) continue d'être déplacé.

8. Procédé selon l'une des revendications précédentes, **caractérisé en ce que** pour l'étape de bourrage à vide, l'avancement des corps de base de brosse (3) est commandé de telle sorte que le tronçon avant (18A) de la languette de bourrage (18) se trouve à l'extérieur du corps de base de brosse (3) pendant l'étape de bourrage à vide.

9. Procédé selon la revendication 8, **caractérisé en ce que** pour l'étape de bourrage à vide, un support (24) sur lequel les corps de base de brosse (3) à équiper de poils sont retenus est déplacé d'un trajet qui est inférieur à la distance d'un corps de base de brosse (3) au prochain.

10. Procédé selon l'une des revendications précédentes, **caractérisé en ce qu'**il est prévu un capteur mécanique au moyen duquel le tronçon (18A) de la languette de bourrage (18) sortant de l'outil de bourrage (16) pendant l'étape de bourrage à vide est détecté.

11. Procédé selon l'une des revendications 1 à 9, **caractérisé en ce qu'**il est prévu un capteur sans contact au moyen duquel le tronçon (18A) de la languette de bourrage (18) sortant de l'outil de bourrage (16) pendant l'étape de bourrage à vide est détecté.

12. Procédé selon l'une des revendications 1 à 9, **caractérisé en ce qu'**il est prévu un système de saisie et d'évaluation d'image (30) au moyen duquel le tronçon (18A) de la languette de bourrage (18) sortant de l'outil de bourrage (16) pendant l'étape de bourrage à vide est détecté et analysé.

13. Procédé selon la revendication 12, **caractérisé en ce que** l'évaluation des images est effectuée pendant une deuxième étape de bourrage à vide suivant la première étape de bourrage à vide.

14. Procédé selon la revendication 12, **caractérisé en ce que** la machine de fabrication de brosse (10) est arrêtée ou ralentie pendant l'évaluation des images.

15. Procédé selon la revendication 12, **caractérisé en ce que** l'évaluation des images est effectuée pendant le processus de bourrage du prochain corps de base de brosse (3).

16. Procédé selon l'une des revendications précédentes, **caractérisé en ce que** la position de l'extrémité avant de la languette de bourrage (18) est détectée dans sa position avancée au maximum.

17. Procédé selon l'une des revendications précédentes, **caractérisé en ce que** la forme du tronçon (18A) de la languette de bourrage (18) sortant de l'outil de bourrage (16) est analysée.

18. Procédé selon l'une des revendications précédentes, **caractérisé en ce que** la course de bourrage à vide est introduite après un nombre ajustable de courses de bourrage.

19. Machine de fabrication de brosse (10) comprenant une boîte de fibres (12), un support (24) pour des corps de base de brosse (3) à bourrer, un moyen de prise de touffe (14), un outil de bourrage (16) comprenant une languette de bourrage (18), une commande (60) et un système de détection (30) pour un tronçon avant (18A) de la languette de bourrage (18), le système de détection (30) étant associé à l'extrémité avant de l'outil de bourrage (16) et la commande (60) étant aménagée de manière à exécuter un procédé selon l'une des revendications précédentes.

20. Machine de fabrication de brosse selon la revendication 19, **caractérisée en ce que** le système de détection (30) présente une caméra et un système d'évaluation d'image.
